# EUROPÄISCHE PATENTSCHRIFT

(11) **EP 4 179 746 B1**
(45) Veröffentlichungstag und Bekanntmachung des Hinweises auf die Patenterteilung: **29.07.2026**
(21) Anmeldenummer: 21735589.0
(22) Anmeldetag: 16.06.2021
(51) Int. Cl.: H04W 4/44

(54) **VERFAHREN ZUR KOMMUNIKATION EINES ZUMINDEST TEILWEISE AUTONOM FAHRENDEN KRAFTFAHRZEUGS UND EINEM FUSSGÄNGER**
METHOD FOR COMMUNICATING BETWEEN AN AT LEAST PARTIALLY AUTONOMOUSLY DRIVING MOTOR VEHICLE AND A PEDESTRIAN
PROCÉDÉ DE COMMUNICATION ENTRE UN VÉHICULE AUTOMOBILE AU MOINS PARTIELLEMENT AUTONOME ET UN PIÉTON

(30) Priorität: 13.07.2020 DE 102020004192
(43) Veröffentlichungstag der Anmeldung: 17.05.2023
(73) Patentinhaber: Daimler Truck AG, 70771 Leinfelden-Echterdingen (DE)
(72) Erfinder: GÜNTHER, Janine, 70771 Leinfelden (DE); SPOHRER, Nicolai, 70186 Stuttgart (DE); VOLKERT, Lucas, 75233 Tiefenbronn (DE); FLERLAGE, Florian, 70327 Stuttgart (DE)
(74) Vertreter: JENSEN & SON
(86) Internationale Anmeldenummer: PCT/EP2021/066221
(87) Internationale Veröffentlichungsnummer: WO 2022/012836

(56) Entgegenhaltungen:
- DE-A1- 102010 048 470
- DE-A1- 102011 111 899
- SEWALKAR PARAG ET AL: "Towards 802.11p-based vehicle-to-pedestrian communication for crash prevention systems", 2017 9TH INTERNATIONAL CONGRESS ON ULTRA MODERN TELECOMMUNICATIONS AND CONTROL SYSTEMS AND WORKSHOPS (ICUMT), IEEE, 6 November 2017 (2017-11-06), pages 404 - 409, XP033297204, DOI: 10.1109/ICUMT.2017.8255154

## Beschreibung

Die Erfindung betrifft ein Verfahren zur Kommunikation eines zumindest teilweise autonom fahrenden Kraftfahrzeugs und einem Fußgänger mittels eines Systems gemäß dem Oberbegriff von Patentanspruch 1. Ferner betrifft die Erfindung ein System.

Es ist bereits bekannt, dass zukünftig autonom fahrende Kraftfahrzeuge, beispielsweise autonom fahrende Lastkraftwägen, sich auf Straßen bewegen werden. Diese Lastkraftwägen können beispielsweise als Zugmaschinen ausgebildet sein und beliebige Aufleger oder Anhänger tragen und somit ein Gespann bilden. Es kann dann vorgesehen sein, dass eine entsprechende Kopplung des Gespanns an sogenannten Autobahn-Hubs oder Betriebshöfen erfolgt. Ein solcher Hub ist oftmals ein privater, gesicherter Betriebshof mit exklusivem Zugriff für selbstfahrende Lastkraftwägen und deren Kunden. Von einem solchen Hub aus werden beispielsweise Level 4-Kraftfahrzeuge, also autonom fahrende Kraftfahrzeuge gemäß den SAE-Standards, operativ betreut.

Oftmals beginnen und enden die Missionen der selbstfahrenden Lastkraftwägen in einem solchen Hub. Die Koordination der selbstfahrenden Lastkraftwägen, das Beladen der Auflieger und Anhänger, die Wartung und Inspektion erfolgen oftmals innerhalb dieser Hubs. Im Falle eines technischen Defekts bei einem autonom fahrenden Lastkraftwagen koordinieren sich die Hubs mit einer zentralen elektronischen Recheneinrichtung, um die Abholung und Wiederherstellung des autonom fahrenden Kraftfahrzeugs durchzuführen. Jeder Hub stellt dabei nötige Wartungs-, Inspektions-, Wäge-, Reinigungs-, Betankungs-, Routinereparatur- und Kalibrierungsinfrastrukturen bereit, die benötigt werden, um die Lastkraftwägen am Laufen zu halten. Hierbei sind oftmals Personen, insbesondere Fußgänger, daran beteiligt, so dass eine Interaktion zwischen den autonom fahrenden Kraftfahrzeugen und den Personen durchzuführen ist.

Die DE 10 2010 001 869 A1 offenbart ein Verfahren und Vorrichtung zur Warnung eines Fußgängers vor herannahenden Fahrzeugen, die eine Kollisionsgefahr für den Fußgänger darstellen können, in dem die Vorrichtung eine Empfangseinrichtung für elektromagnetische Strahlung aufweist und mittels dieser Empfangseinrichtung ein elektromagnetischen Signal empfangen wird, das von dem Fahrzeug, von dem die Kollisionsgefahr ausgehen kann, ausgesendet wird und bei Erkennung einer drohenden Kollisionsgefahr der Fußgänger mittels eines Warnsignals, das durch eine in der Vorrichtung angebrachte Warneinrichtung abgegeben wird, vor der drohenden Kollision gewarnt wird.

Die DE 10 2011 111 899 A1 beschreibt eine Detektionsvorrichtung, ein Verfahren und ein Kraftfahrzeug zur Detektion wenigstens eines Trägers eines mobilen Sende-/Empfanggeräts relativ zu einem Fahrzeug, welche in einem Fahrzeug vorgesehen ist, mit einer Sende-/Empfangseinrichtung, welche dazu ausgebildet ist, mit einem zu detektierenden mobilen Sende-/Empfanggerät zu kommunizieren; mit einer Umfeldsensoreinrichtung zum Erfassen von Informationen des Umfelds des Fahrzeugs; mit einer Auswerteeinrichtung, welche dazu ausgebildet ist, abhängig von der Kommunikation und den erfassten Informationen einen Trägertyp des mobilen Sende-/Empfanggeräts und eine bevorstehende Kollision des Trägers des Sende-/Empfanggeräts mit dem Fahrzeug zu ermitteln; mit einer Steuereinrichtung, welche derart ausgebildet ist, abhängig von dem ermittelten Trägertyp eine Warnsignaleinrichtung und/oder eine Fahrzeugeinrichtung des Fahrzeugs derart zu steuern, um im Falle einer von der Auswerteeinrichtung ermittelten bevorstehenden Kollision des Trägers des mobilen Sende-/Empfanggeräts mit dem Fahrzeug diese zu verhindern und/oder eine Unfallschwere der bevorstehenden Kollision zu reduzieren.

Die DE 10 2010 048 470 A1 beschreibt ein Fahrzeug-Fußgänger-Kommunikationssystem mit einer fahrzeugbasierten Vorrichtung, die einen Sender und einen Empfänger zum Übertragen der globalen Positionierung des Fahrzeugs besitzt. Der Sender sendet eine globale Position des Fahrzeugs als Teil einer periodischen Fahrzeug-Bakennachricht. Von einem Fußgänger wird eine fußgängerbasierte Vorrichtung getragen. Die fußgängerbasierte Vorrichtung besitzt einen Sender und einen Empfänger zum Übertragen einer globalen Position des Fußgängers als Teil einer periodischen Fußgänger-Bakennachricht. Auf der Positionierung des Fahrzeugs in Bezug auf den Fußgänger basierend wird durch die fahrzeugbasierte Vorrichtung und/oder die fußgängerbasierte Vorrichtung ein Positionsbewusstsein des Fahrzeugs in Bezug auf den Fußgänger geprüft. Dem Fahrzeug und/oder dem Fußgänger wird ein Alarmsignal geliefert, das basierend auf den jeweiligen globalen Positionen des Fußgängers und des Fahrzeugs eine Gegenwart des Fahrzeugs oder des Fußgängers angibt.

Ferner bildet der Konferenzbeitrag "Towards 802.11p-based vehicle-to-pedestrian communication for crash prevention systems" von Parag Sewalkar et al., von der 2017 9th International Congress on Ultra Modern Telecommunications and Control Systems and Workshops (ICUMT), vom 06.11.2017, Seiten 404-409, einen Stand der Technik.

Aufgabe der vorliegenden Erfindung ist es, ein Verfahren sowie ein System zu schaffen, mittels welchen die Kommunikation zwischen zumindest einem teilweise autonom fahrenden Kraftfahrzeug und einem Fußgänger verbessert werden kann.

Diese Aufgabe wird durch ein Verfahren sowie durch ein System gemäß den unabhängigen Patentansprüchen gelöst. Vorteilhafte Ausgestaltungsformen sind in den Unteransprüchen angegeben.

Ein Aspekt der Erfindung betrifft ein Verfahren zur Kommunikation eines zumindest teilweise autonom fahrenden Kraftfahrzeugs und einem Fußgänger mittels eines Systems, bei welchem die Anwesenheit des Fußgängers durch eine Erfassung einer Anwesenheit einer mobilen Empfangseinrichtung des Systems an dem Fußgänger von dem autonom fahrenden Kraftfahrzeug mittels einer Kommunikationseinrichtung des zumindest teilweise autonom fahrenden Kraftfahrzeugs erfasst wird und in Abhängigkeit von der Erfassung ein Kommunikationssignal von dem zumindest teilweise autonom fahrenden Kraftfahrzeug an die mobile Empfangseinrichtung des Fußgängers übertragen wird.

Es ist vorgesehen, dass von der mobilen Empfangseinrichtung ein weiteres Kommunikationssignal an die Kommunikationseinrichtung des zumindest teilweise autonom fahrenden Kraftfahrzeugs zur Kommunikation übertragen wird und das weitere Kommunikationssignal von dem zumindest teilweise autonom fahrenden Kraftfahrzeug beim zumindest teilweise autonomen Fahrbetrieb berücksichtigt wird.

Dadurch ist es ermöglicht, dass zwischen dem Fußgänger und dem zumindest teilweise autonom fahrenden Kraftfahrzeug eine verbesserte Kommunikation durchgeführt werden kann. Insbesondere kann beispielsweise dem teilweise autonom fahrenden Kraftfahrzeug mitgeteilt werden, ob der Fußgänger eine entsprechende Route des zumindest teilweise autonom fahrenden Kraftfahrzeugs kreuzt. Dies kann dann wiederum von dem zumindest teilweise autonom fahrenden Kraftfahrzeug berücksichtigt werden, und beispielsweise kann eine entsprechende Routenanpassung des Kraftfahrzeugs durchgeführt werden. Somit kann die Sicherheit des zumindest autonom fahrenden Kraftfahrzeugs sowie des Fußgängers erhöht werden.

Bei dem zumindest teilweise autonom fahrenden Kraftfahrzeug handelt es sich insbesondere um einen sogenannten Lastkraftwagen. Insbesondere weist der Lastkraftwagen zumindest eine Automatisierungsstufe Level 4 gemäß den SAE-Standards auf. Mit anderen Worten weist das Kraftfahrzeug eine Hochautomatisierung auf. Die Führung des Kraftfahrzeugs wird dabei dauerhaft von einem elektronischen Fahrzeugführungssystem des Kraftfahrzeugs übernommen. Werden die Fahraufgaben vom System nicht mehr bewältigt, kann der Fahrer aufgefordert werden, die Führung zu übernehmen.

Insbesondere das zumindest teilweise autonom fahrende Kraftfahrzeug ist technisch so konzipiert, dass dieses Fahrten ausführen kann, die auf eine bestimmte Domäne beschränkt sind. Für beispielsweise entsprechende Hub-Anwendungen geht man hier in einem ersten Schritt von einem Einsatzgebiet, wie beispielsweise eine Autobahn, ein Highway oder eine Interstate, aus. Dies hat zur Folge, dass die technische Realisierung nur mit den Gegebenheiten umgehen kann, die in dieser Domäne auftauchen. Das beinhaltet jedoch nicht die ausgereifte Interaktion zwischen Menschen und dem zumindest teilweise autonom fahrenden Kraftfahrzeug, wie sie im komplexeren Umfeld eines Hubs vorkommen kann. Erfindungsgemäß können beispielsweise nun Fußgängerüberwege, Werkstattbereiche sowie Übergabebereiche für Anhänger zum An- und Abkoppeln verbessert betrieben werden. Um hierbei das sichere Arbeitsumfeld im Hub zu realisieren, wird das erfindungsgemäße System und Verfahren vorgeschlagen, das die Interaktion zwischen dem Menschen und dem zumindest teilweise autonom fahrenden Kraftfahrzeug realisiert. Kreuzen sich die Wege des Fußgängers und des zumindest teilweise autonom betriebenen beziehungsweise fahrenden Kraftfahrzeugs im Hub, wird eine Verständigung zwischen den Beteiligten durchgeführt, dass sie sich gesehen haben und wer von den beiden Kommunikationsteilnehmern einen Vortritt für den Anderen gewährt.

Ferner ist vorgesehen, dass die mobile Empfangseinrichtung eine Betätigungseinrichtung aufweist und beim Betätigen der Betätigungseinrichtung durch den Fußgänger ein nochmals weiteres Kommunikationssignal von einer mobilen Empfangseinrichtung erzeugt und an die Kommunikationseinrichtung übertragen wird und das nochmals weitere Kommunikationssignal von dem zumindest teilweise autonom fahrenden Kraftfahrzeug bei dem zumindest teilweise autonomen Fahrbetrieb berücksichtigt wird. Insbesondere kann beispielsweise der Fußgänger somit dem zumindest teilweise autonom fahrenden Kraftfahrzeug mitteilen, dass der Fußgänger das zumindest teilweise autonom fahrende Kraftfahrzeug erkannt hat. Insbesondere kann der Fußgänger aktiv mitteilen, dass dieser das zumindest teilweise autonom fahrende Kraftfahrzeug erkannt hat. Sollte beispielsweise eine aktive Betätigung des Fußgängers nicht erfolgen, so kann das zumindest teilweise autonom fahrende Kraftfahrzeug erhöhte Vorsicht walten lassen, wenn es dem Fußgänger begegnet. Das Betätigungselement kann beispielsweise als Knopf auf der mobilen Empfangseinrichtung, insbesondere auf einem Transponder, ausgebildet sein. Ferner kann beispielsweise vorgesehen sein, dass durch die Betätigung des Knopfes eine sichere Interaktion zwischen dem Fußgänger und dem zumindest teilweise autonom fahrenden Kraftfahrzeug realisiert werden kann, wobei durch das Drücken des Knopfes beispielsweise dem zumindest teilweise autonom fahrenden Kraftfahrzeug mitgeteilt werden kann, dass sich die Wege zwischen dem Fußgänger und dem zumindest teilweise autonom fahrenden Kraftfahrzeug kreuzen können. Sobald das zumindest teilweise autonom fahrende Kraftfahrzeug dann wiederum diese Information detektiert hat, kann beispielsweise ein weiteres Signal, beispielsweise ein Aufblenden beziehungsweise ein Hupen des zumindest teilweise autonom fahrenden Kraftfahrzeugs realisiert werden, so dass dem Fußgänger wiederum mitgeteilt werden kann, dass auch das zumindest teilweise autonom fahrende Kraftfahrzeug ihn erkannt hat und ihn entweder zum Warten auffordert oder beispielsweise ein Queren erlaubt. Somit kann die Kommunikation zwischen dem zumindest teilweise autonom fahrenden Kraftfahrzeug und dem Fußgänger verbessert werden.

Gemäß einer vorteilhaften Ausgestaltungsform wird zwischen dem zumindest teilweise autonom fahrenden Kraftfahrzeug und dem Fußgänger die Kommunikation in einem teilweise abgegrenzten Bereich durchgeführt. Beispielsweise kann der zumindest teilweise abgegrenzte Bereich ein sogenannter Hub sein. Der teilweise abgrenzte Bereich kann auch vollständig abgegrenzt sein. Der Hub wiederum kann, wie bereits erwähnt, beispielsweise Fußgängerüberwege, Werkstattbereiche sowie Übergabebereiche für Anhänger zum An- und Abkoppeln aufweisen. Innerhalb dieses Hubs ist nun vorgesehen, dass die Kommunikation zwischen dem Fußgänger und dem zumindest teilweise autonom fahrenden Kraftfahrzeug durchgeführt wird, da sich insbesondere in diesem teilweise abgegrenzten Bereich die Wege zwischen dem Fußgänger und dem zumindest teilweise autonom fahrenden Kraftfahrzeug kreuzen können. Somit kann innerhalb des Hubs eine verbesserte Kommunikation zwischen dem Fußgänger und dem zumindest teilweise autonom betriebenen Kraftfahrzeug realisiert werden, so dass eine Unfallgefahr minimiert werden kann.

Ferner hat es sich als vorteilhaft erwiesen, wenn die mobile Empfangseinrichtung als Zugangselement des Fußgängers zum zumindest teilweise abgegrenzten Bereich bereitgestellt wird. Beispielsweise kann das Zugangselement eine Access-Karte beziehungsweise eine Key-Karte sein, mit der der Fußgänger Zugang zu dem abgegrenzten Bereich erhält. Somit ist es ermöglicht, dass mittels eines einzigen Elements, welches insbesondere bereits beim Fußgänger vorhanden ist, auch die Kommunikation zwischen dem zumindest teilweise autonomen Kraftfahrzeug und dem Fußgänger durchgeführt werden kann. Somit kann aufwandsreduziert die Kommunikation zwischen dem zumindest teilweise autonom betriebenen Kraftfahrzeug und dem Fußgänger ermöglicht werden.

Ferner hat es sich als vorteilhaft erwiesen, wenn die mobile Empfangseinrichtung als Transponder bereitgestellt wird. Der Transponder kann beispielsweise auch als Zugangselement zum abgegrenzten Bereich ausgebildet sein. Insbesondere ist es bereits aus dem Stand der Technik bekannt, dass mittels eines Transponders ein entsprechender Zugang für Fußgänger in abgegrenzte Bereiche realisiert werden kann. Somit kann aufwandsreduziert und mit bereits vorhandenen Mitteln die Kommunikation zwischen dem zumindest teilweise fahrenden Kraftfahrzeug und dem Fußgänger durchgeführt werden.

Ferner hat es sich als vorteilhaft erwiesen, wenn von dem zumindest teilweise autonom fahrenden Kraftfahrzeug der Fußgänger zusätzlich mittels einer Erfassungseinrichtung des zumindest teilweise autonom fahrenden Kraftfahrzeugs erfasst wird. Beispielsweise kann die Erfassungseinrichtung als Lidarsensoreinrichtung und/oder als Kamera und/oder als Radarsensoreinrichtung und/oder als Ultraschallsensoreinrichtung ausgebildet sein. Insbesondere kann dadurch eine zusätzliche Erfassung des Fußgängers realisiert werden, wodurch eine redundante Möglichkeit geschaffen ist, den Fußgänger verbessert zu erkennen.

In einer weiteren vorteilhaften Ausgestaltungsform wird bei einer Erfassung eines Fußgängers mit der Erfassungseinrichtung und bei einer Nichterfassung einer Anwesenheit der mobilen Empfangseinrichtung mittels der Kommunikationseinrichtung ein Warnsignal mittels der Kommunikationseinrichtung an eine zentrale elektronische Recheneinrichtung des Systems übertragen. Sollte beispielsweise der Fußgänger nicht die mobile Empfangseinrichtung aufweisen, so kann es sich bei dem Fußgänger um eine nicht autorisierte Person innerhalb des abgegrenzten Bereichs handeln. Sollte somit das zumindest teilweise autonom fahrende Kraftfahrzeug den Fußgänger erfassen, jedoch kein entsprechendes Kommunikationssignal von der mobilen Empfangseinrichtung empfangen, so kann von einem nicht berechtigen Zugang des Fußgängers ausgegangen werden. Dieser nicht berechtigte Zugang kann dann wiederum an die zentrale elektronische Recheneinrichtung übertragen werden, wodurch entsprechende Gegenmaßnahmen eingeleitet werden können.

Ferner hat es sich als vorteilhaft erwiesen, wenn die Anwesenheit eines Fußgängers zusätzlich mittels einer weiteren Erfassungseinrichtung des Systems erfasst wird. Beispielsweise kann das System, insbesondere innerhalb des abgegrenzten Bereichs, mit anderen Worten innerhalb des Hubs, beispielsweise über Kameras oder Laserschranken verfügen und somit die Anwesenheit des Fußgängers zusätzlich erfassen. Sollte dann wiederum von dem zumindest teilweise autonom fahrenden Kraftfahrzeug nicht das Empfangen des Kommunikationssignals bestätigt werden, so kann das System davon ausgehen, dass es sich bei dem Fußgänger um einen nicht berechtigten Fußgänger handelt. Somit können Eindringlinge innerhalb des abgegrenzten Bereichs zuverlässig verhindert werden.

Gemäß einer weiteren vorteilhaften Ausgestaltungsform wird mittels der mobilen Empfangseinrichtung ein Warnsignal für den Fußgänger erzeugt, sobald von der mobilen Empfangseinrichtung das Kommunikationssignal empfangen wird. Beispielsweise kann die mobile Empfangseinrichtung über eine Vibrationseinrichtung verfügen, wobei dann eine Vibration zum Wahrnehmen für den Fußgänger erzeugt wird, sobald das zumindest teilweise autonome Kraftfahrzeug das Kommunikationssignal an die mobile Empfangseinrichtung übertragen hat. Somit kann dem Fußgänger mitgeteilt werden, dass sich ein zumindest teilweise autonom fahrendes Kraftfahrzeug in seiner unmittelbaren Nähe befindet, wodurch dieser über die Anwesenheit gewarnt werden kann. Somit kann das Unfallrisiko innerhalb des abgegrenzten Bereichs minimiert werden.

Ein weiterer Aspekt der Erfindung betrifft ein System zum Durchführen einer Kommunikation eines zumindest teilweise autonom fahrenden Kraftfahrzeugs und einem Fußgänger mit zumindest einer mobilen Empfangseinrichtung, wobei das System zum Durchführen eines Verfahrens nach dem vorhergehenden Aspekt ausgebildet ist. Insbesondere wird das Verfahren mittels des Systems durchgeführt.

Vorteilhafte Ausgestaltungsformen des Verfahrens sind als vorteilhafte Ausgestaltungsformen des Systems anzusehen. Das System weist dazu gegenständliche Merkmale auf, welche eine Durchführung des Verfahrens und eine vorteilhafte Ausgestaltungsform davon ermöglichen.

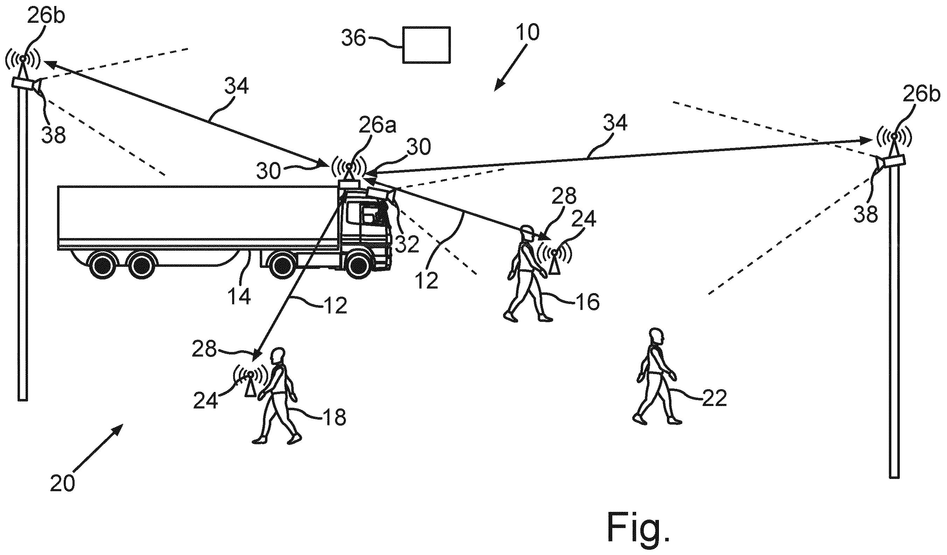

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Figur eine schematische Seitenansicht einer Ausführungsform eines Systems.

In der Figur sind gleiche oder funktionsgleiche Elemente mit den gleichen Bezugszeichen versehen.

Die Figur zeigt in einer schematischen Seitenansicht eine Ausführungsform eines Systems 10 zur Kommunikation 12 zwischen einem zumindest teilweise autonom fahrenden Kraftfahrzeug 14, welches insbesondere als Lastkraftwagen ausgebildet ist, und einem Fußgänger 16, 18. Insbesondere sind vorliegend zwei Fußgänger 16, 18 gezeigt, insbesondere ein erster Fußgänger 16 und ein zweiter Fußgänger 18. Bei dem ersten Fußgänger 16 sowie dem zweiten Fußgänger 18 handelt es sich beispielsweise um autorisierte Personen für einen abgegrenzten Bereich 20, beispielsweise für einen Hub. Ferner ist ein dritter Fußgänger 22 gezeigt. Zwischen dem dritten Fußgänger 22 und dem zumindest teilweise autonom fahrenden Kraftfahrzeug 14 ist keine Kommunikation 12 eingezeichnet. Bei dem dritten Fußgänger 22 kann es sich beispielsweise um einen Eindringling beziehungsweise um eine nicht autorisierte Person innerhalb des abgegrenzten Bereichs 20 handeln.

Beim Verfahren zur Kommunikation 12 zwischen dem zumindest teilweise autonom fahrenden Kraftfahrzeug 14 und dem Fußgänger 16, 18 mittels des Systems 10 wird die Anwesenheit des Fußgängers 16, 18 zur Erfassung einer Anwesenheit einer mobilen Empfangseinrichtung 24 des Systems 10 an dem Fußgänger 16, 18 von dem autonom fahrenden Kraftfahrzeug 14 mittels einer Kommunikationseinrichtung 26a des zumindest teilweise autonom fahrenden Kraftfahrzeugs 14 erfasst, und in Abhängigkeit von der Erfassung wird ein Kommunikationssignal 28 von dem zumindest teilweise autonom fahrenden Kraftfahrzeug 14 an die mobile Empfangseinrichtung 24 übertragen.

Es ist vorgesehen, dass von der mobilen Empfangseinrichtung 24 ein weiteres Kommunikationssignal 30 an die Kommunikationseinrichtung 26a des zumindest teilweise autonom fahrenden Kraftfahrzeugs 14 zur Kommunikation 12 übertragen wird und das weitere Kommunikationssignal 30 von dem zumindest teilweise autonom fahrenden Kraftfahrzeug 14 beim zumindest teilweise autonomen Fahrbetrieb berücksichtigt wird.

Insbesondere kann vorgesehen sein, dass zwischen dem zumindest teilweise autonom fahrenden Kraftfahrzeug 14 und dem Fußgänger 16, 18 die Kommunikation 12 in einem zumindest teilweise abgegrenzten Bereich 20 durchgeführt wird, wobei dieser teilweise abgegrenzte Bereich 20 auch als Hub bezeichnet werden kann. Die mobile Empfangseinrichtung 24 kann dabei als Zugangselement des Fußgängers 16, 18 zum zumindest teilweise abgegrenzten Bereich 20 bereitgestellt werden. Ferner kann die mobile Empfangseinrichtung 24 auch als Transponder bereitgestellt werden.

Es kann weiterhin vorgesehen sein, dass die mobile Empfangseinrichtung 24 eine Betätigungseinrichtung aufweist und beim Bedienen beziehungsweise Betätigen der Betätigungseinrichtung durch den Fußgänger 16, 18 ein nochmals weiteres Kommunikationssignal von der mobilen Empfangseinrichtung 24 erzeugt wird und an die Kommunikationseinrichtung 26a übertragen wird und das nochmals weitere Kommunikationssignal von dem zumindest teilweise autonom fahrenden Kraftfahrzeug 14 bei dem zumindest teilweise autonomen Fahrbetrieb berücksichtigt wird.

Es kann weiterhin vorgesehen sein, dass von dem zumindest teilweise autonom fahrenden Kraftfahrzeug 14 der Fußgänger 16, 18 zusätzlich mittels einer Erfassungseinrichtung 32 des zumindest teilweise autonom fahrenden Kraftfahrzeug 14 erfasst wird. Es kann dann beispielsweise vorgesehen sein, dass bei einer Erfassung eines Fußgängers 16, 18 mit der Erfassungseinrichtung 32 und bei einer Nichterfassung einer Anwesenheit der mobilen Empfangseinrichtung 24, wie es beispielsweise durch die dritte Person 22 dargestellt ist, ein Warnsignal 34 mittels der Kommunikationseinrichtung 26a an eine zentrale elektronische Recheneinrichtung 36 des Systems 10 übertragen wird. Insbesondere kann hierzu beispielsweise das System 10 entsprechende Kommunikationseinrichtungen 26b aufweisen, so dass das Warnsignal 34 empfangen werden kann.

Weiterhin kann vorgesehen sein, dass die Anwesenheit des Fußgängers 16, 18 zusätzlich mittels einer weiteren Erfassungseinrichtung 38 des Systems 10 erfasst wird. Mittels der mobilen Empfangseinrichtung 24 kann ferner ein Warnsignal für den Fußgänger 16, 18 erzeugt werden, sobald von der mobilen Empfangseinrichtung 24 das Kommunikationssignal 28 empfangen wird.

Insbesondere ist somit beschrieben, dass jeder Mitarbeiter im abgegrenzten Bereich 20, was insbesondere durch die erste Person 16 und die zweite Person 18 dargestellt ist, mit einem entsprechenden Transponder ausgestattet werden kann, so dass das zumindest teilweise autonom fahrende Kraftfahrzeug 14 die Fußgänger 16, 18 jederzeit als Menschen identifizieren kann. Dieser Transponder kann beispielsweise mit üblichen Zugangskontrollen, beispielsweise mittels einer Access-Karte oder einer Key-Karte gekoppelt sein. Sobald sich der Fußgänger 16, 18 in der Nähe des zumindest teilweise autonom fahrenden Kraftfahrzeugs 14 befindet, wird dieser detektiert und ein Informationsaustausch ermöglicht. Für eine sichere Interaktion besteht beispielsweise die Möglichkeit, über den Transponder zum Beispiel durch Drücken der Betätigungseinrichtung, welche beispielsweise ein Knopf sein kann, dem zumindest teilweise autonom fahrenden Kraftfahrzeug 14 mitzuteilen, dass die Fußgänger 16, 18 die Wege des zumindest teilweise autonom fahrenden Kraftfahrzeugs 14 voraussichtlich kreuzen werden. Sobald das zumindest teilweise autonom fahrende Kraftfahrzeug 14 die Information detektiert hat, wird ein weiteres Kommunikationssignal ausgetauscht, wie zum Beispiel die Vibration des Transponders beziehungsweise ein Aufblenden oder Hupen des zumindest teilweise autonom fahrenden Kraftfahrzeugs 14, so dass dem Fußgänger 16, 18 mitgeteilt werden kann, dass auch das zumindest teilweise autonom fahrende Kraftfahrzeug 14 ihn erkannt hat und ihn entweder zum Warten auffordert oder ein Queren erlaubt.

Zusätzlich zur sicheren Interaktion zwischen dem zumindest teilweise autonom fahrenden Kraftfahrzeug 14 und den Fußgängern 16, 18 kann beispielsweise die mobile Empfangseinrichtung 24 der autorisierten Mitarbeiter dazu genutzt werden, unerwünschte Eindringlinge, was insbesondere durch die dritte Person 22 dargestellt ist, im Hub zu identifizieren, wenn ein Abgleich zwischen Sendesignal und Überwachungsdaten des abgegrenzten Bereichs 20 stattfindet. Ein Überwachungssystem, was insbesondere durch die weitere Erfassungseinrichtung 38 dargestellt ist, welches beispielsweise die dritte Person 22 detektieren kann, beispielsweise kamerabasiert über Laserschranken oder FLIR, kann diese Daten mit den verfügbaren Sendesignalen der autorisierten Mitarbeiter abgleichen und so feststellen, ob sich nicht autorisierte Personen im abgegrenzten Bereich 20 befinden. Im gleichen Kontext kann ein Abgleich zwischen den Sensordaten des zumindest teilweise autonom fahrenden Kraftfahrzeugs 14 und den Sendesignalen erfolgen. Erkennt die Sensorik des zumindest teilweise autonom fahrenden Kraftfahrzeugs 14 den dritten Fußgänger 22, der keine Empfangseinrichtung 24 trägt, wird ebenfalls ein Alarm ausgelöst.

Insbesondere kann dadurch eine geringere Anforderung an die Sensorik des zumindest teilweise autonom fahrenden Kraftfahrzeugs 14 realisiert werden. Ferner kann eine Vermeidung von Unfällen realisiert werden, die durch beispielhafte fehlerhafte Detektion entstehen würden. Das System 10 ist insbesondere witterungsunabhängig bezüglich der Detektion, und es kann das Übersehen der Fußgänger 16, 18 verhindert werden, wenn sich diese beispielsweise im Blindbereich des zumindest teilweise autonom fahrenden Kraftfahrzeugs 14 befinden. Des Weiteren kann eine sichere Interaktion zwischen den Mitarbeitern des abgegrenzten Bereichs 20 und dem zumindest teilweise autonom fahrenden Kraftfahrzeug 14 realisiert werden. Ferner kann eine automatisierte Erkennung von Unbefugten und damit eine Erhöhung der Sicherheit innerhalb des abgegrenzten Bereichs 20 realisiert werden.

Insgesamt zeigt die Erfindung eine sichere Interaktion zwischen Menschen und autonomen Fahrzeugen sowie eine Detektion von unautorisierten Personen.

## Patentansprüche

1. Verfahren zur Kommunikation (12) eines zumindest teilweise autonom fahrenden Kraftfahrzeugs (14) und einem Fußgänger (16, 18) mittels eines Systems (10), bei welchem die Anwesenheit des Fußgängers (16, 18) durch eine Erfassung einer Anwesenheit einer mobilen Empfangseinrichtung (24) des Systems (10) an dem Fußgänger (16, 18) von dem autonom fahrenden Kraftfahrzeug (14) mittels einer Kommunikationseinrichtung (26a) des zumindest teilweise autonom fahrenden Kraftfahrzeugs (14) erfasst wird und in Abhängigkeit von der Erfassung ein Kommunikationssignal (28) von dem zumindest teilweise autonom fahrenden Kraftfahrzeug (14) an die mobile Empfangseinrichtung (24) des Fußgängers (16, 18) übertragen wird, **dadurch gekennzeichnet, dass** von der mobilen Empfangseinrichtung (24) ein weiteres Kommunikationssignal (30) an die Kommunikationseinrichtung (26a) des zumindest teilweise autonom fahrenden Kraftfahrzeugs (14) zur Kommunikation (12) übertragen wird und das weitere Kommunikationssignal (30) von dem autonom fahrenden Kraftfahrzeug (14) beim zumindest teilweise autonomen Fahrbetrieb berücksichtigt wird, wobei die mobile Empfangseinrichtung (24) eine Betätigungseinrichtung aufweist und bei Betätigen der Betätigungseinrichtung durch den Fußgänger (16, 18) ein nochmals weiteres Kommunikationssignal von der mobilen Empfangseinrichtung (24) erzeugt und an die Kommunikationseinrichtung (26a) übertragen wird und das nochmals weitere Kommunikationssignal von dem zumindest teilweise autonom fahrenden Kraftfahrzeug (14) bei dem zumindest teilweise autonomen Fahrbetrieb berücksichtigt wird.

2. Verfahren nach Anspruch 1,
**dadurch gekennzeichnet, dass**
zwischen dem zumindest teilweise autonom fahrenden Kraftfahrzeug (14) und dem Fußgänger (16, 18) die Kommunikation (12) in einem zumindest teilweise abgegrenzten Bereich (20) durchgeführt wird.

3. Verfahren nach Anspruch 2,
**dadurch gekennzeichnet, dass**
die mobile Empfangseinrichtung (24) als Zugangselement des Fußgängers (16, 18) zum zumindest teilweise abgegrenzten Bereich (20) bereitgestellt wird.

4. Verfahren nach einem der vorhergehenden Ansprüche,
**dadurch gekennzeichnet, dass**
die mobile Empfangseinrichtung (24) als Transponder bereitgestellt wird.

5. Verfahren nach einem der vorhergehenden Ansprüche,
**dadurch gekennzeichnet, dass**
von dem zumindest teilweise autonom fahrenden Kraftfahrzeug (14) der Fußgänger (16, 18) zusätzlich mittels einer Erfassungseinrichtung (32) des zumindest teilweise autonom fahrenden Kraftfahrzeugs (14) erfasst wird.

6. Verfahren nach Anspruch 5,
**dadurch gekennzeichnet, dass**
bei einer Erfassung eines Fußgängers (16, 18) mit der Erfassungseinrichtung (32) und bei einer Nichterfassung einer Anwesenheit der mobilen Empfangseinrichtung (24) mittels der Kommunikationseinrichtung (26a) ein Warnsignal (34) mittels der Kommunikationseinrichtung (26a) an eine zentrale elektronische Recheneinrichtung (36) des Systems (10) übertragen wird.

7. Verfahren nach einem der vorhergehenden Ansprüche,
**dadurch gekennzeichnet, dass**
die Anwesenheit des Fußgängers (16, 18) zusätzlich mittels einer weiteren Erfassungseinrichtung (38) des Systems (10) erfasst wird.

8. Verfahren nach einem der vorhergehenden Ansprüche,
**dadurch gekennzeichnet, dass**
mittels der mobilen Empfangseinrichtung (24) ein Warnsignal für den Fußgänger (16, 18) erzeugt wird, sobald von der mobilen Empfangseinrichtung (24) das Kommunikationssignal (28) empfangen wird.

9. System (10) zum Durchführen einer Kommunikation (12) eines zumindest teilweise autonom fahrenden Kraftfahrzeugs (14) und einem Fußgänger (16, 18), mit zumindest einer mobilen Empfangseinrichtung (24) für den Fußgänger (16, 18), wobei das System (10) zum Durchführen eines Verfahrens nach einem der Ansprüche 1 bis 8 ausgebildet ist.

## Claims

1. A method for communicating (12) between an at least partially autonomously-driving motor vehicle (14) and a pedestrian (16, 18) by means of a system (10) in which the presence of the pedestrian (16, 18) is detected by the autonomously-driving motor vehicle (14) by means of a communication device (26a) of the at least partially autonomously-driving motor vehicle (14) by the detection of the presence of a mobile receiving device (24) of the system (10) on the pedestrian (16, 18) and in which this presence is transmitted to the mobile receiving device (24) of the pedestrian (16, 18) by the at least partially autonomously-driving motor vehicle (14) dependent on the detection of a communication signal (28),
**characterised in that**
a further communication signal (30) is transmitted by the mobile receiving device (24) to the communication device (26a) of the at least partially autonomously-driving motor vehicle (14) in order to communicate, and that this further communication signal is taken into account by the autonomously-driving motor vehicle (14) in at least partially autonomous driving mode, the mobile receiving device (24) having an actuating device, and when this actuating device is actuated by the pedestrian (16, 18) an additional further communication signal being generated by the mobile receiving device (24) and transmitted to the communication device (26a), and this additional further communication signal being taken into account by the at least partially autonomously-driving motor vehicle (14) in at least partially autonomous driving mode.

2. A method according to claim 1,
**characterised in that**
communication (12) between the at least partially autonomously-driving motor vehicle (14) and the pedestrian (16, 18) takes place in an at least partially delimited region (20).

3. A method according to claim 2,
**characterised in that**
the mobile receiving device (24) is provided as an access element of the pedestrian (16, 18) to this at least partially delimited region (20).

4. A method according to any one of the previous claims,
**characterised in that**
the mobile receiving device (24) is provided in the form of a transponder.

5. A method according to any one of the previous claims,
**characterised in that**
the pedestrian (16, 18) is additionally detected by the at least partially automatically-driving motor vehicle (14) by means of a detection device (32) of the at least partially automatically-driving motor vehicle (14).

6. A method according to claim 5,
**characterised in that**
when a pedestrian (16, 18) is detected by the detection device (32) and the presence of the mobile receiving device (24) is not detected by the communication device (26a), a warning signal (34) is transmitted to a central electronic computing device (36) of the system (10) by means of the communication device (26a).

7. A method according to any one of the previous claims,
**characterised in that**
the presence of the pedestrian (16, 18) is additionally detected by means of a further detection means (38) of the system (10).

8. A method according to any one of the previous claims,
**characterised in that**
a warning signal for the pedestrian (16, 18) is generated by the mobile receiving device (24) as soon as the communication signal (28) is received by the mobile receiving device (24).

9. A system (10) for communicating (12) between an at least partially autonomously-driving motor vehicle (14) and a pedestrian (16, 18), having at least one mobile receiving device (24) for the pedestrian (16, 18), the system (10) being designed to carry out a method according to any one of claims 1 to 8.

## Revendications

1. Procédé pour établir une communication (12) entre un véhicule à moteur (14) circulant de manière au moins partiellement autonome et un piéton (16, 18) au moyen d'un système (10), dans lequel la présence du piéton (16, 18) est détectée par une détection d'une présence d'un dispositif de réception mobile (24) du système (10) se trouvant sur le piéton (16, 18) par le véhicule à moteur (14) autonome au moyen d'un dispositif de communication (26a) du véhicule à moteur (14) circulant de manière au moins partiellement autonome et, en fonction de la détection, un signal de communication (28) est transmis par le véhicule à moteur (14), circulant au moins partiellement autonome, au dispositif de réception mobile (24) du piéton (16, 18), **caractérisé en ce qu'**un autre signal de communication (30) est transmis par le dispositif de réception mobile (24) au dispositif de communication (26a) du véhicule à moteur (14) circulant de manière au moins partiellement autonome, à des fins de communication (12) et **en ce que** l'autre signal de communication (30) provenant du véhicule à moteur (14) circulant de manière autonome est pris en compte lors de la conduite au moins partiellement autonome, dans lequel le dispositif de réception mobile (24) comporte un dispositif d'actionnement et lorsque le piéton (16, 18) actionne le dispositif d'actionnement, un nouveau signal de communication est généré par le dispositif de réception mobile (24) et transmis au dispositif de communication (26a) et le nouveau signal de communication (30) provenant du véhicule à moteur (14) circulant de manière autonome est pris en compte lors de la conduite au moins partiellement autonome.

2. Procédé selon la revendication 1,
**caractérisé en ce que**
la communication (12) entre le véhicule à moteur (14) circulant de manière au moins partiellement autonome et le piéton (16, 18) s'effectue dans une zone (20) délimitée au moins à certains endroits.

3. Procédé selon la revendication 2,
**caractérisé en ce que**
le dispositif de réception mobile (24) est utilisé sous la forme d'organe d'accès pour le piéton (16, 18) lui permettant d'accéder à la zone (20) délimitée au moins à certains endroits.

4. Procédé selon l'une quelconque des revendications précédentes, **caractérisé en ce que** le dispositif de réception mobile (24) est utilisé en tant que transpondeur.

5. Procédé selon l'une quelconque des revendications précédentes **caractérisé en ce que**
le piéton (16, 18) est en outre détecté par le véhicule à moteur (14) circulant de manière au moins partiellement autonome, à l'aide d'un dispositif de détection (32) du véhicule à moteur (14) circulant de manière au moins partiellement autonome.

6. Procédé selon la revendication 5,
**caractérisé en ce que**
lors d'une détection d'un piéton (16, 18) à l'aide du dispositif de détection (32) et, lorsque la présence du dispositif de réception mobile (24) n'est pas détectée au moyen du dispositif de communication (26a), un signal d'avertissement (34) est transmis au moyen du dispositif de communication (26a) à une unité centrale de traitement (36) du système (10).

7. Procédé selon l'une quelconque des revendications précédentes, **caractérisé en ce que**
la présence du piéton (16, 18) est également détectée au moyen d'un autre dispositif de détection (38) du système (10).

8. Procédé selon l'une quelconque des revendications précédentes, **caractérisé en ce que**
un signal d'avertissement destiné au piéton (16, 18) est généré au moyen du dispositif de réception mobile (24) dès que le signal de communication (28) est reçu par le dispositif de réception mobile (24).

9. Système (10) permettant d'établir une communication (12) entre un véhicule à moteur (14) circulant de manière au moins partiellement autonome et un piéton (16, 18), comprenant au moins un dispositif de réception mobile (24) destiné au piéton (16, 18), le système (10) étant conçu pour mettre en œuvre le procédé selon l'une quelconque des revendications 1 à 8.
